# EUROPÄISCHE PATENTSCHRIFT

(11) **EP 0 806 626 B1**
(45) Veröffentlichungstag und Bekanntmachung des Hinweises auf die Patenterteilung: **30.06.2004**
(21) Anmeldenummer: 97107451.3
(22) Anmeldetag: 06.05.1997
(51) Int. Cl.: B60R 22/46

(54) **Fahrzeuginsassen-Rückhaltsystem**
Safety belt tension retractors system
Système de rétraction de la ceinture par tension

(30) Priorität: 06.05.1996 DE 29608194 U
(43) Veröffentlichungstag der Anmeldung: 12.11.1997
(73) Patentinhaber: TRW Automotive GmbH, 73553 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- WO-A-96/04154
- DE-A- 2 505 625
- DE-A- 3 044 951
- DE-U- 29 612 781
- PATENT ABSTRACTS OF JAPAN vol. 012, no. 490 (M-779), 21. Dezember 1988 (1988-12-21) & JP 63 212151 A (FUJI KIKO CO LTD), 5. September 1988 (1988-09-05)

## Beschreibung

Die Erfindung betrifft ein Fahrzeuginsassen-Rückhaltesystem nach dem Oberbegriff des Anspruchs 1.

Ein elektrischer Zünder eines pyrotechnischen Gasgenerators als Teil eines Rückhaltesystems ist beispielsweise aus der EP 0 547 443 A1 bekannt. Der Zünder besteht aus einem Zündwiderstand, der in einen mit einem pyrotechnischen Treibmaterial gefüllten Raum ragt. Der Zündwiderstand ist mit am Gehäuse des Gasgenerators nach außen vorstehenden Kontaktstiften verbunden, auf die ein entsprechender Stecker aufgesetzt werden kann, an dem ein Kabel angebracht ist, das den Zünder mit einem Auslösegerät verbindet, das den Zeitpunkt des Auslösens der Zündung bestimmt. Die elektrische Steckverbindung muß extrem kontaktsicher und deshalb korrosionsbeständig sein, damit auch nach mehreren Jahren Fahrbetrieb noch eine sichere Auslösung in einem Kollisionsfall gewährleistet ist. Die Kontaktstifte und die entsprechenden Gegenteile werden deshalb teilweise vergoldet oder platiniert, was sie relativ teuer macht. Zudem muß der Stecker so ausgebildet sein, daß er sich trotz Vibrationen nicht löst und daß eine sichere Montage gewährleistet ist.

Darüber hinaus sind pyrotechnische Gasgeneratoren bekannt, die einen Treibsatz mit einem Treibsatzgehäuse aufweisen, an welchem das Kabel nicht lösbar befestigt ist. Das Kabel ist dabei mit einem im Inneren des Treibsatzgehäuses befindlichen Zündwiderstand verbunden, an den pyrotechnisches Treibmaterial angrenzt, so daß auf ein entsprechendes elektrisches Signal durch den Zündwiderstand direkt das Treibmaterial gezündet werden kann. Dieser bekannte Gasgenerator hat jedoch den Nachteil, daß im nicht montierten Zustand die entsprechenden Kontaktdrähte für die Auslösung des Treibmaterials kurzgeschlossen werden müssen, um ein unbeabsichtigtes Zünden, z.B. während des Transports, und ein Verschieben des Kolbens zu verhindern, was den kompletten Gasgenerator unbrauchbar macht.

Aus der WO 96/04154 ist ein gattungsgemäßes Fahrzeuginsassen-Rückhaltesystem in Form eines Gurtstraffers gezeigt. Dabei ist am stirnseitigen Ende des Zylinders eines Linearantriebs ein Gehäuse angebracht, das einen Treibsatz und einen seitlich angebrachten Zünder enthält, über den der Treibsatz aktiviert wird.

Ein weiterer Gurtstrafferantrieb ist aus der JP 63 212151 A bekannt, wobei hier ebenfalls stimseitig an einen Linearantrieb ein Gehäuse angesetzt ist, das eine integrierte Zünder-Treibladung enthält.

Die Erfindung schafft ein Fahrzeuginsassen-Rückhaltesystem, bei dem die Gefahr eines ungewollten Betätigens des Gasgenerators während des Transports reduziert wird und das insgesamt platzsparend ausgeführt ist.

Dies wird durch ein Fahrzeuginsassen-Rückhaltesystem nach Anspruch 1 gelöst.

Die Erfindung führt zu mehreren Vorteilen, denn es wird ein Zünder verwendet, der keine aufwendigen Maßnahmen gegen Korrosion oder Lösen der elektrischen Steckverbindung vorsieht und dennoch eine höhere Sicherheit dahingehend gewährleistet, daß der Zünder stets mit dem Kabel in elektrischem Kontakt ist. Dies wird einerseits dadurch erreicht, daß der Zünder ein eigenes Gehäuse aufweist, in dem pyrotechnisches Zündmaterial mit einem elektrischen Zündelement und einem daran angeschlossenen Kabelende eingeschlossen ist. Der erfindungsgemäße elektrische Zünder ist unmittelbar an dem Kabel angebracht, so daß die bislang übliche Steckverbindung entfällt.

Die Gefahr des ungewollten Betätigen des Gasgenerators während des Transports wird bei einem mit einem elektrischen Zünder ausgestatteten Fahrzeuginsassen-Rückhaltesystem mit einem Treibsatz in einem Treibsatzgehäuse und einem darin enthaltenen pyrotechnischen Treibmaterial dadurch ausgeschlossen, daß das Gehäuse des Zünders getrennt vom Treibsatz transportiert, jedoch am Treibsatzgehäuse in solcher Weise befestigt werden kann, daß das Treibmaterial durch einander gegenüberliegende Öffnungen im Gehäuse und im Treibsatzgehäuse hindurch anzündbar ist. Der Zünder und der Treibsatz bilden getrennte Einheiten, die erst bei der Montage im Fahrzeug aneinandergefügt werden müssen. Das erfindungsgemäße Rückhaltesystem ist z.B. bei einem Gurtstraffer einsetzbar.

Gemäß einer bevorzugten Ausführungsform ist das Kabelende in einer Durchtrittsöffnung des Gehäuses vergossen, wodurch dieses im Bereich der Kabelbefestigung zudem gegen Feuchtigkeitseintritt geschützt ist.

Eine einfache Montage des Zünders am Treibsatzgehäuse wird dadurch erreicht, daß an das Gehäuse des Zünders als Befestigungsmittel mindestens ein Teil einer Steckverbindung angeformt ist, mittels der der Zünder an dem Treibsatzgehäuse angebracht werden kann. Da die Steckverbindung zwischen Zünder und Treibsatzgehäuse keine elektrische Verbindung darstellt, können Treibsatz und Zünder ohne elektrische Kontaktprobleme erst im Fahrzeug auf einfache Weise aneinander angeschlossen werden.

Eine bevorzugte Steckverbindung zwischen Zünder und Treibsatzgehäuse besteht darin, daß am Gehäuse des Zünders als Befestigungsmittel ein Befestigungsring angeformt ist, der als Steckverbindung dient und der auf ein zylindrisches Treibsatzgehäuse aufgesteckt werden kann.

Gemäß einer bevorzugten Ausführungsform ist am Gehäuse des Zünders mindestens ein mit dem Kabel verbundener elektrischer Steckkontakt angeformt, mittels dem über einen einklinkbaren Gegenstecker mindestens ein weiterer Sensor und/oder mindestens ein Schalter an das Kabel angeschlossen werden kann. Dies dient dazu, möglichst wenig separate Leitungen im Fahrzeug legen zu müssen, so daß zum Beispiel ein Gurtschloßsensor oder ein in der Nähe des Zünders vorgesehener Schalter an das Kabel angeschlossen werden kann. Für die Auslösung der Zündung verantwortliche andere Sensoren können so sehr einfach angeschlossen oder andere Sicherheitssysteme im Fahrzeug im Kollisionsfall durch entsprechende Schalter ausgelöst werden.

Eine hierzu alternative Ausführung sieht vor, daß das Kabel als mehradriges Kabel ausgebildet ist, von dem einige Adern vor dem Gehäuse zu mindestens einem weiteren Sensor und/oder mindestens einem Schalter abzweigen. Dadurch können weitere Steckkontakte vermieden werden.

Gemäß einer bevorzugten Ausführungsform ist das Treibsatzgehäuse zylindrisch und das Gehäuse des Zünders weist einen entsprechend konkaven Gehäuseabschnitt mit einem sich daran anschließenden Befestigungsring auf, so daß eine Aufnahmeöffnung entsteht, durch die das Gehäuse auf das Treibsatzgehäuse lösbar aufgesteckt werden kann. Der konkave Gehäuseabschnitt schafft eine gasdichte Verbindung des Inneren des Gehäuses mit dem Inneren des Treibsatzgehäuses, da er großflächig am Treibsatzgehäuse anliegt.

Vorzugsweise ist der Gasgenerator so ausgebildet, daß der Treibsatz im Inneren eines Zylinders als Teil einer Kolben-Zylinder-Einheit eines Gurtstraffers angeordnet ist, wobei der Zünder am Zylinder befestigt werden kann. Bei dieser Ausführungsform kann der Treibsatz sehr platzsparend im Fahrzeug eingebaut werden, was dadurch noch verbessert werden kann, daß der Treibsatz kreisringförmig ausgebildet ist und die Wandung des Zylinders zumindest teilweise das Treibsatzgehäuse bildet.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch einen Zylinder eines erfindungsgemäßen Gurtstraffers mit einem Gasgenerator mit einem Treibsatz und einem am Zylinder arretierten erfindungsgemäßen elektrischen Zünder,
- Figur 2 eine Schnittansicht nach der Linie II-II in Figur 1,
- Figur 3 eine zweite Ausführungsform des erfindungsgemäßen Fahrzeuginsassen-Rückhaltesystems, mit einem elektrischen Zünder, der mit einer elektrischen Steckverbindung ausgebildet ist, an die ein Gurtschloßschalter angeschlossen ist, und
- Figur 4 eine dritte Ausführungsform des erfindungsgemäßen Fahrzeuginsassen-Rückhaltesystems.

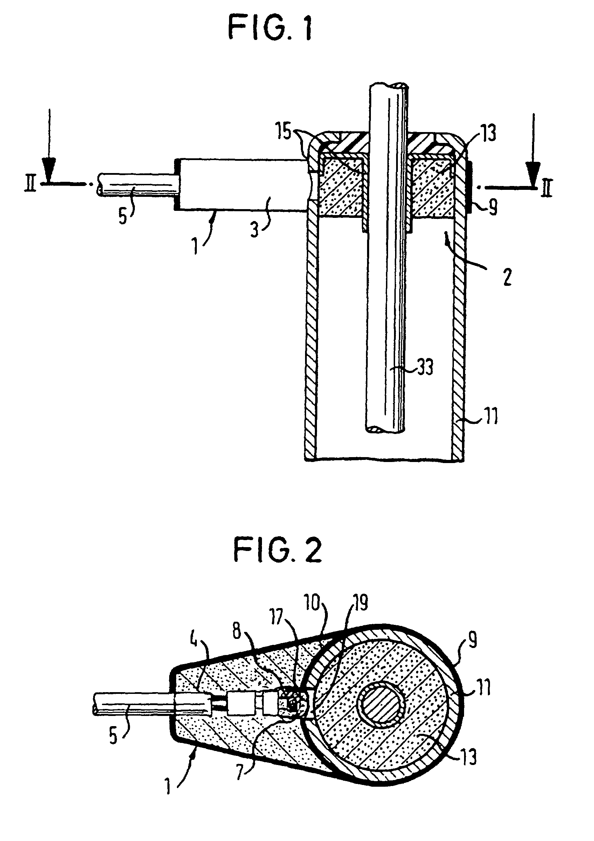

In Figur 1 ist ein Farzeuginsassen-Rückhaltesystem mit einem Gasgenerator gezeigt. Das Rückhaltesystem ist ein Gurtstraffers. Der Gasgenerator umfaßt einen elektrischen Zünder 1 und einen Treibsatz 2. Der elektrische Zünder 1 weist ein Gehäuse 3 mit einer nicht gezeigten Durchtrittsöffnung auf, in welcher das Ende 4 eines mehradrigen Kabels 5 vergossen ist, das eine elektrische Verbindung des Zünders 1 mit einem nicht gezeigten Auslösegerät herstellt. Im Inneren des Gehäuses 3 ist, umgeben von einer Vergußmasse 6, ein pyrotechnisches Zündmaterial 7 vorgesehen, das durch ein ebenfalls darin vorgesehenes Zündelement in Form eines an das Kabelende 4 angeschlossenen Zündwiderstands 8 gezündet werden kann, sobald das Auslösegerät ein entsprechendes Signal liefert. Das Gehäuse 3 des Zünders 1 weist einen Befestigungsring 9 auf, der an einen konkaven Gehäuseabschnitt 10 angeformt ist. Mittels der entstehenden Aufnahmeöffnung ist der als separate Einheit ausgebildete Zünder 1 an einem Zylinder 11 einer Kolben-Zylinder-Einheit des Gurtstraffers befestigt. Am oberen Ende des Zylinders 11 ist in dessen Innerem der kreisringförmige Treibsatz 2 angeordnet, wobei der Zylinder 11 in diesem Bereich auch einen Teil des Treibsatzgehäuses 15 bildet. Der Zünder 1 wird durch den Befestigungsring 9 von oben auf den Zylinder 11 geschoben, bis eine Öffnung 17 im Gehäuse 3 des Zünders 1 mit einer Öffnung 19 im Zylinder 11 fluchtet. Der in den Figuren 1 und 2 gezeigte Zünder 1 kann zum Beispiel nach einem Kollisionsfall wieder vom Treibsatzgehäuse 15 entfernt werden, um den Zylinder 11 samt dem in ihm angeordneten Treibsatz 2 auszutauschen.

Der dargestellte Zünder 1 zeichnet sich durch eine hohe Funktionssicherheit aus, da der Zündwiderstand 8 nicht über eine elektrische Steckverbindung mit dem Kabel 5 verbunden ist.

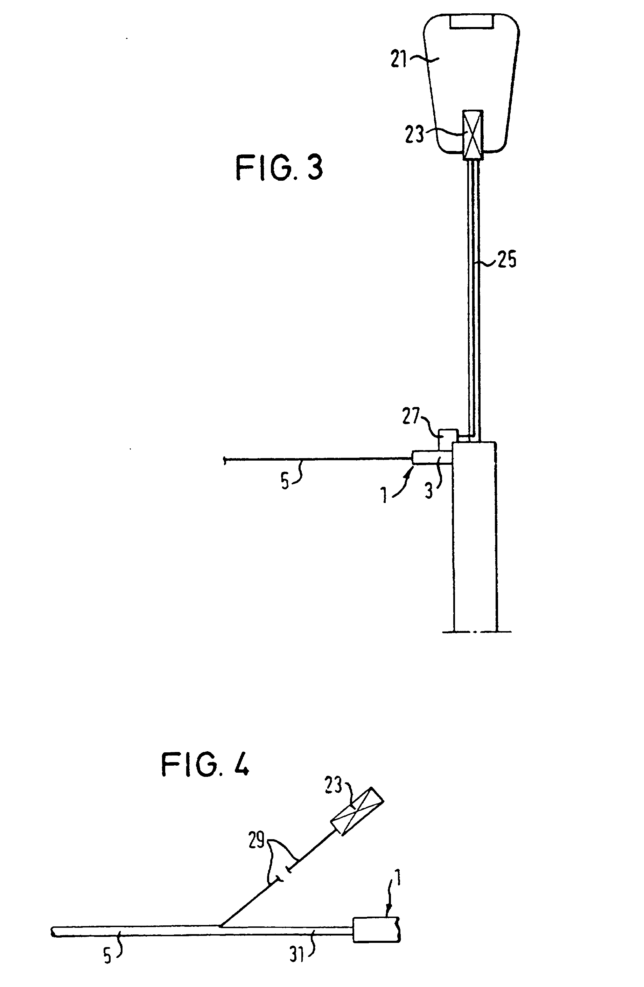

Sind in der Nähe des Zünders 1 weitere Sensoren oder Schalter angeordnet, die im Kollisionsfall elektrische Signale erhalten oder abgeben, kann, wie in den Figuren 3 und 4 gezeigt ist, der Zünder 1 mit weiteren Sensoren oder auch Schaltern verbunden sein. In Figur 3 ist ein an einem Gurtschloß 21 angebrachter Gurtschloßschalter 23 zur Sitzbelegungsabfrage über eine elektrische Leitung 25 mit dem Zünder 1 verbunden. Das Gehäuse 3 des Zünders 1 hat hierzu an seiner Außenseite nicht gezeigte elektrische Steckkontakte, an die die Leitung 25 über einen Gegenstecker 27 anschließbar ist. Die Steckkontakte können dabei über entsprechende Leitungen im Inneren des Zünders 1 mit anderen als Signale für die Auslösung des Zünders 1 leitenden Adern des Kabels 5 verbunden sein, so daß eine elektrische Verbindung des Gurtschloßschalter 23 über die Leitung 25, den Gegenstecker 27, den elektrischen Zünder 1 und das Kabel 5 z.B. mit dem Auslösegerät vorhanden ist, das den Auslösezeitpunkt bestimmt.

Wenn ein Gegenstecker 27 vermieden werden soll, kann sich (vgl. Fig. 4) das Kabel 5 bereits vor dem elektrischen Zünder 1 aufteilen, indem ein Kabelstrang 29 zu dem Gurtschloßschalter 23 und ein weiterer Kabelstrang 31 zum Zünder 1 führt.

Durch die in den Figuren 3 und 4 gezeigten Zünder ist es sehr leicht möglich, nachträglich in einem Fahrzeug eingebaute Sicherheitssysteme, wie zum Beispiel einen Gurtschloßschalter, elektrisch an andere Teile anzuschließen.

Im Falle einer Kollision wird über das Kabel 5 ein elektrisches Signal über das Kabel 5 von dem Auslösegerät zu dem Zündwiderstand 8 im Inneren des Gehäuses 3 geleitet, um das Zündmaterial 7 zu zünden. Durch die Öffnungen 17 und 19 hindurch wird daraufhin das Treibmaterial 13 angezündet, wodurch Gas erzeugt wird, welches einen nicht gezeigten Kolben antreibt, der über eine Kolbenstange 33 mit dem Gurtschloß 21 verbunden ist.

## Patentansprüche

1. Fahrzeuginsassen-Rückhaltesystem, mit
einer Kolben-Zylinder-Einheit, die einen Zylinder (11) und einen darin verschieblich angeordneten Kolben aufweist,
einem pyrotechnischen Gasgenerator zum Antrieb der Kolben-Zylinder-Einheit, wobei der Gasgenerator ein Treibsatzgehäuse (15) mit darin enthaltenem Treibsatz (2) mit einem pyrotechnischern Material (13) aufweist und
einem pyrotechnisches Zündmaterial (7) und ein elektrisches Zündelement aufweisenden elektrischen Zünder (1),
**dadurch gekennzeichnet,**
**daß** der pyrotechnische Gasgenerator im Inneren des Zylinders (11) angeordnet ist und der Zünder (1) ein eigenes, getrennt vom Treibsatz (2) transportierbares Gehäuse (3) aufweist, in dem das Zündmaterial (7), das Zündelement und ein daran angeschlossenes Kabelende (4) eingeschlossen sind, und
**daß** der Zünder (1) radial am Zylinder (11) so angebracht ist, daß eine radiale Öffnung (19) im Zylinder (11) einer Öffnung (17) im Gehäuse (3) des Zünders (1) gegenüberliegt und das Treibmaterial (13) durch die Öffnungen (17, 19) hindurch anzündbar ist

2. Rückhaltesystem nach Anspruch 1, **dadurch gekennzeichnet, daß** das Ende (29) des Kabels (5) in einer Durchtrittsöffnung des Gehäuses (3) vergossen ist.

3. Rückhaltesystem nach einem der vorstehenden Ansprüche, **dadurch gekennzeichnet, daß** der Zünder (1) als Einheit lösbar am Treibsatzgehäuse (15) des Gasgenerators befestigt werden kann.

4. Rückhaltesystem nach Anspruch 3, **dadurch gekennzeichnet, daß** an das Gehäuse (3) des Zünders (1) als Befestigungsmittel mindestens ein Teil einer Steckverbindung angeformt ist, mittels der der Zünder (1) an dem Treibsatzgehäuse (15) angebracht werden kann.

5. Rückhaltesystem nach Anspruch 4, **dadurch gekennzeichnet, daß** am Gehäuse (3) als Befestigungsmittel ein Befestigungsring (9) angeformt ist, der als Steckverbindung dient und der auf ein zylindrisches Treibsatzgehäuse (15) aufsteckbar ist.

6. Rückhaltesystem nach einem der vorstehenden Ansprüche, **dadurch gekennzeichnet, daß** am Gehäuse (3) mindestens ein mit dem Kabel (5) verbundener elektrischer Steckkontakt angeformt ist, mittels dem über einen einklinkbaren Gegenstecker (27) mindestens ein weiterer Sensor und/oder mindestens ein Schalter an das Kabel (5) angeschlossen werden kann.

7. Rückhaltesystem nach einem der Ansprüche 1 bis 7, **dadurch gekennzeichnet, daß** das Kabel (5) als mehradriges Kabel ausgebildet ist, von dem einige Adern vor dem Gehäuse (3) zu mindestens einem weiteren Sensor und/oder mindestens einem Schalter abzweigen.

8. Rückhaltesystem nach Anspruch 8, **dadurch gekennzeichnet, daß** am Ende der abzweigenden Adern Steckverbindungen angebracht sind.

9. Rückhaltesystem nach einem des vorhergehenden Ansprüche, **dadurch gekennzeichnet, daß** das Treibsatzgehäuse (15) zylindrisch ist und das Gehäuse (3) einen entsprechend konkaven Gehäuseabschnitt (10) mit einem sich daran anschließenden Befestigungsring (9) aufweist, so daß eine Aufnahmeöffnung ensteht, durch die das Gehäuse (3) auf das Treibsatzgehäuse (15) lösbar aufgesteckt werden kann.

10. Rückhaltesystem nach einem der vorhergehenden Ansprüche, **dadurch gekennzeichnet, daß** der Treibsatz (2) kreisringförmig ausgebildet ist, und die Wandung des Zylinders (11) zumindest teilweise das Treibsatzgehäuse (15) bildet.

## Claims

1. A vehicle occupant restraint system, comprising
a piston/cylinder unit including a cylinder (11) and a piston arranged for sliding movement therein,
a pyrotechnical gas generator to actuate the piston/cylinder unit, the gas generator including a propellant charge housing (15) having a propellant charge (2) contained therein with a pyrotechnical material (13), and
an electrical igniter (1) including pyrotechnical ignition material (7) and an electrical ignition element,
**characterized in that**
the pyrotechnical gas generator is arranged inside the cylinder (11), and the igniter (1) has a housing (3) of its own which is transportable separately from the propellant charge (2) and in which the ignition material (7), the ignition element and a cable end (4) connected thereto are enclosed, and
that the igniter (1) is mounted radially at the cylinder (11) such that a radial opening (19) in the cylinder (11) faces an opening (17) in the housing (3) of the igniter (1) and the propellant material (13) is ignitable through the openings (17, 19).

2. The restraint system as set forth in claim 1, **characterized in that** the end (29) of the cable (5) is sealed in a passage opening of the housing (3).

3. The restraint system as set forth in either of the preceding claims, **characterized in that** the igniter (1) may be releasably secured as a unit to the propellant charge housing (15) of the gas generator.

4. The restraint system as set forth in claim 3, **characterized in that** at least one part of a plug connection is molded integrally with the housing (3) of the igniter (1) as a fastener means, the igniter (1) being attachable to the propellant charge housing (15) by means of this plug connection.

5. The restraint system as set forth in claim 4, **characterized in that** a fastener ring (9) is molded integrally with the housing (3) as a fastener means, the fastener ring serving as a plug connection and being mountable on a cylindrical propellant charge housing (15).

6. The restraint system as set forth in any of the preceding claims, **characterized in that** at least one electrical plug contact connected to the cable (5) is molded integrally with the housing (3), at least one further sensor and/or at least one switch being connectable to the cable (5) by means of the plug contact via a latchable mating connector (27).

7. The restraint system as set forth in any of claims 1 to 6, **characterized in that** the cable (5) is configured as a multi-core cable, of which a few cores are branched off prior to the housing (3) to at least one further sensor and/or to at least one switch.

8. The restraint system as set forth in claim 7, **characterized in that** at the end of the branched-off cores plug connections are attached.

9. The restraint system as set forth in any of the preceding claims, **characterized in that** the propellant charge housing (15) is cylindrical and the housing (3) features a correspondingly concave housing section (10) having a fastener ring (9) adjacent thereto so that a receiving opening is defined through which the housing (3) can be releasably mounted on the propellant charge housing (15).

10. The restraint system as set forth in any of the preceding claims, **characterized in that** the propellant charge (2) is configured in the shape of a circular ring and the wall of the cylinder (11) forms at least in part the propellant charge housing (15).

## Revendications

1. Système de retenue d'occupants d'un véhicule, comportant
une unité à piston-et-cylindre qui présente un cylindre (11) et un piston agencé à déplacement dans celui-ci,
un générateur de gaz pyrotechnique pour entraîner l'unité à piston-et-cylindre, le générateur de gaz présentant un boîtier (15) de charge de propulsion contenant une charge de propulsion (2) avec une matière (13) pyrotechnique, et
une matière d'allumage (7) pyrotechnique et un allumeur électrique (1) présentant un élément d'allumage électrique et
**caractérisé en ce que**
le générateur de gaz pyrotechnique est agencé à l'intérieure du cylindre (11) et l'allumeur (1) présente un boîtier (3) qui lui est propre et qui est transportable séparément de la charge de propulsion (2), dans lequel sont enfermés la matière d'allumage (7), l'élément d'allumage et une extrémité de câble (4) raccordée à celui-ci, et
**en ce que** l'allumeur (1) est monté radialement sur le cylindre (11) de telle sorte qu'une ouverture radiale (19) dans le cylindre (11) est opposée à une ouverture (17) dans le boîtier (3) de l'allumeur (1), et la matière de propulsion (13) peut être allumée à travers les ouvertures (17, 19).

2. Système de retenue selon la revendication 1, **caractérisé en ce que** l'extrémité (29) du câble (5) est coulée dans une ouverture de passage du boîtier (3).

3. Système de retenue selon l'une des revendications précédentes, **caractérisé en ce que** l'allumeur (1) peut être fixé en tant qu'unité de manière amovible sur le boîtier (15) de la charge de propulsion du générateur de gaz.

4. Système de retenue selon la revendication 3, **caractérisé en ce que** sur le boîtier (3) de l'allumeur (1), on forme en tant que moyen de fixation une partie d'une connexion à fiches, au moyen de laquelle l'allumeur (1) peut être monté sur le boîtier (15) de la charge de propulsion.

5. Système de retenue selon la revendication 4, **caractérisé en ce que** sur le boîtier (3) de l'allumeur (1), on forme en tant que moyen de fixation une bague de fixation (9) qui sert de connexion et qui peut être enfilée sur un boîtier cylindrique (15) de la charge de propulsion.

6. Système de retenue selon l'une des revendications précédentes, **caractérisé en ce que** sur le boîtier (3) est formé au moins un contact électrique à fiches, relié au câble (5), au moyen duquel on peut raccorder au câble (5), par l'intermédiaire d'une fiche opposée (27) encliquetable, au moins un autre détecteur et/ou au moins un interrupteur.

7. Système de retenue selon l'une des revendications 1 à 7, **caractérisé en ce que** le câble (5) est réalisé sous la forme d'un câble à plusieurs brins, dont quelques brins partent en dérivation en amont du boîtier (3) vers au moins un autre détecteur et/ou au moins un interrupteur.

8. Système de retenue selon la revendication 7, **caractérisé en ce qu'**à l'extrémité des brins montés en dérivation sont disposées des connexions à fiches.

9. Système de retenue selon l'une des revendications précédentes, **caractérisé en ce que** le boîtier (15) de la charge de propulsion est cylindrique et le boîtier (3) présente une section de boîtier (10) concave de façon correspondante, avec une bague de fixation (9) se raccordant à celle-ci, de telle sorte qu'il se forme une ouverture de réception à travers laquelle on peut enfiler de façon amovible le boîtier (3) sur le boîtier (15) de la charge de propulsion.

10. Système de retenue selon l'une des revendications précédentes, **caractérisé en ce que** la charge de propulsion (2) est réalisée sous forme d'anneau circulaire, et **en ce que** la paroi du cylindre (11) forme au moins en partie le boîtier (15) de la charge de propulsion.
